# EUROPEAN PATENT SPECIFICATION

(11) **EP 2 243 084 B1**
(45) Date of publication and mention of the grant of the patent: **16.04.2014**
(21) Application number: 08701670.5
(22) Date of filing: 25.01.2008
(51) Int. Cl.: G06F 9/52, G06F 9/54

(54) **METHOD FOR COORDINATING PROCESSING IN A DISTRIBUTED SYSTEM**
VERFAHREN ZUR VERARBEITUNGSKOORDINATION IN EINEM VERTEILTEN SYSTEM
PROCÉDÉ PERMETTANT LA COORDINATION DE TRAITEMENT DANS UN SYSTÈME DISTRIBUÉ

(43) Date of publication of application: 27.10.2010
(73) Proprietor: Global Infinipool GMBH, 35039 Marburg (DE)
(72) Inventor: SCHOLL, Martin, 35041 Marburg (Lahn) (DE); BRINDÖPKE, Marcus, 35043 Marburg (DE); PREUSSE, Michael, 35037 Marburg (DE); ROTH, Otto, 35274 Kirchhain (DE); HAMPE, Jürgen Felix, 35039 Marburg (DE)
(74) Representative: Walkenhorst, Andreas
(86) International application number: PCT/EP2008/050871
(87) International publication number: WO 2009/092450

(56) References cited:
- WO-A-2004/025462
- US-A1- 2005 192 098
- US-B1- 6 988 272

## Description

### [Technical Field]

The present invention relates to a method for coordinating processing in a distributed system and, in particular, to a method for controlling processing units in a distributed system to coordinate their actions or some of their actions. The present invention also relates to a system configured for controlling processing units, and a processing unit and a controlling unit configured to be used in such a system.

### [Background]

In computer network technology, distributed computing is the processing of one task on a plurality of individual processing elements (or units). The individual processing elements may be located on different computers connected together. Each individual processing element performs a portion of the task. Coordinating the processing of the portions of the task on the individual processing elements includes properly and consistently putting together the outputs coming from the individual processing elements making up the distributed system.

When the individual processing elements share a common clock, they can be instructed by a common controlling unit to carry out the processing of the portions of the task and the transmission of the corresponding outputs in accordance with a common timetable. Thus, time-consistent outputs may be obtained by a central receiving unit in charge of gathering the outputs coming from individual processing elements. The outputs may be messages bearing each a timestamp, so that the message payloads can be interpreted with respect to time, once received by the central receiving unit.

For instance, the individual processing elements may be seismic sensors (seismometers) distributed across an area of interest. The sensors may share a common clock by relying on clock signals broadcasted from a central position. Upon receiving a particular clock signal, the seismic sensors may be programmed to transmit a message including a measure and a particular timestamp. When received by the central receiving unit, the measures can be treated in a consistent and meaningful manner with respect to time, because each measure is accompanied by a timestamp. The measures can for instance be meaningfully compared with each other and analyzed.

When the individual processing elements do not share a common clock but instead have each a local clock, the local clocks may drift from each other. The timestamps accompanying the measures coming from each element may then lack consistency from a chronological perspective. One solution to this problem is to synchronize the local clocks.

In the *"seismic sensors"* example described above, this would mean that each seismic sensor has a local clock, and that the local clocks of the seismic sensors are regularly adjusted by reference to a common central clock. The central clock is assumed to be more precise and more stable than the local clocks of the seismic sensors. At one point in time with reference to their local clock, the seismic sensors may be programmed to transmit a message containing a measure and a timestamp, obtained from the adjusted local clock. The central receiving unit can therefore treat the received messages in a consistent and meaningful manner with respect to time.

An example of such a method is disclosed in Saurabh Ganeriwal, Ram Kumar, Sachin Adlakha, and Mani Srivastava, Network-wide time synchronization in sensor networks, Technical report, Networked and Embedded Systems Lab, Elec. Eng. Dept., UCLA, April 2002 (reference [1]). Specifically, reference [1] discloses a method for synchronizing local clocks of sensors in a network.

Another example is disclosed in Kay Römer, Time synchronization in ad hoc networks, Proceedings of the 2nd ACM international symposium on Mobile ad hoc networking & computing, October 04-05, 2001, Long Beach, CA, USA (reference [2]). Specifically, reference [2] discloses a time synchronization method for networks wherein components are spontaneously networked, i.e. for so-called ad hoc networks.

References [1] and [2] disclose examples of a first class of methods which address the problem and aim of assisting a central receiving unit in consistently interpreting the output of the individual components with respect to time. In other words, these methods aim at interpreting past actions, e.g. for measuring seismic waves at specific locations in an area of interest and at regular points in time.

A second class of methods forming the background of the present invention address the determination of meaningful global states in a distributed system.

One of these methods is for instance disclosed in K. Mani Chandy, Leslie Lamport, Distributed Snapshots: Determining Global States of Distributed Systems, ACM Transactions on Computer Systems, Vol. 3, No. 1, February 1985, Pages 63-75 (reference [3]). It discloses a method for determining the global state of a distributed system during the execution of processes therein. The method helps to detect when a stable property has been reached in a distributed system, wherein it is assumed that the processes running therein do not share a common clock or memory. Each process records its state and the states of incoming channels, and the recorded process states and channel states are collected and assembled to form the recorded global state. Recorded meaningful global states can therefore be determined. Any process can initiate the determination method.

The method of reference [3] is also called a snapshot method, for recording a consistent state across a distributed system.

As explained above, methods exist for monitoring past events in a synchronized distributed system or for detecting a global state in a non-synchronized distributed system. There is however a need for a simple method for coordinating future actions of individual processing elements in a distributed system, in the event that it is difficult, impossible, too computationally expensive or not desired to synchronize the local clocks of the individual processing elements.

The prior art also includes WO 2004/025462 A2, which relates to a failsafe feedback method between a data processing system and a control system to maximize resources utilization and prevent data overrun of the data processing system. The processing system is operable to periodically send a status message to the control system, the status message comprising a message ID.

It is therefore desirable to provide a method for coordinating actions of a plurality of individual processing elements which meets or partially meets the above-mentioned objectives.

### [Summary]

Such a method is provided by claim 1. Advantageous embodiments of the method are described in the dependent claims.

The method of the invention, which comprises two alternatives, is configured for controlling processing units, such as for instance computer processing units used in a distributed system. It includes a first sending procedure for sending, by a client unit, at least one stream of messages to each of the processing units. Each message includes an identifier, wherein the identifier is a member of an ordered group.

In the first alternative of the method of the invention, the messages are sent in an order such that, if a first message is sent before a second message, the identifier of the first message is smaller than the identifier of the second message. In the second alternative of the method of the invention, the messages are sent in an order such that, if a first message is sent before a second message, the identifier of the first message is larger than the identifier of the second message.

In both alternatives, the method further includes a second sending procedure for sending, by a controlling unit, a request for performing an action to all processing units. The request includes a trigger, and the trigger is a member of the ordered group. The method yet further includes, for each of the processing units, a first receiving procedure for receiving, by the processing unit, the at least one stream of messages; a second receiving procedure for receiving, by the processing unit, the request; and a determining and triggering procedure.

In the first alternative of the method of the invention, the determining and triggering procedure is a determining and triggering procedure for determining, by the processing unit, upon receiving a message, if the identifier of the message is equal to or larger than the trigger and, if so, for triggering, by the processing unit, the action. In the second alternative of the method of the invention, the determining and triggering procedure is a determining and triggering procedure for determining, by the processing unit, upon receiving a message, if the identifier of the message is smaller than or equal to the trigger and, if so, for triggering, by the processing unit, the action.

The method aims at coordinating actions to be carried out by the processing units. In other words, the method aims at coordinating when a series of actions are to be performed in a distributed system. To this end, the method of the invention provides means to assist the processing units to determine when to perform a particular action.

For instance, the particular action may be a modification of a parameter of production in a distributed manufacturing system, the execution of a backup in a distributed storage system, the shutdown of computer units, the creation of a version in a distributed storage system (within the meaning of copending application PCT/EP2007/060544), changing the state of a storage entity, for instance from read-write to read-only, or a combination of the above actions (non-exhaustive list).

The method enables this coordination without requiring local clock synchronization. Action coordination is provided amongst processing units without time synchronization. No absolute time reference scale is set. Instead, triggers, which are each member of an order group, provide a relative reference scale for triggering actions by the processing units.

The method further enables this coordination without needing to stop the processing (the coordination process is performed concurrently with the processing). Actions can be performed across the processing units of a distributed system without disrupting the distributed processing.

How this is achieved will now be explained in more details. In the following description, it is assumed, as an example and for better understanding of the method of the invention, that the ordered group is the group of integers. Also for better understanding, the description is essentially limited to the above-mentioned first alternative of the method of the invention. A skilled person would however be able to generalize the description to any ordered group, for both the first and second alternative of the method of the invention, wherein an ordered group is defined as a group G equipped with a partial order "≤" (where the sign "≤" is the operator "smaller or equal to") which is translation-invariant. In other words, "≤" has the property that, for all x, y, and z in G, if x ≤ *y* then xz ≤ yz and zx s *zy*.

Let us now start the description limited to an ordered group being the integers and to the first alternative. The method uses integers, or sequence numbers, which are unique to the client unit. The streams of messages sent by the client unit to the processing units contain integers in ascending order. This is because the messages are sent in an order such that, if a first message is sent before a second message, the identifier of the first message is smaller than the identifier of the second message and because integers are used as identifiers. In other words, the messages are sent in ascending order of their respective identifier.

The identifiers, or sequence numbers, act as message identification numbers. Furthermore, they provide the referential heart beats of the distributed system and are used to coordinate actions to be performed by the processing units.

The controlling unit sends a request to perform an action to each of the processing units. The requested action may for instance be the execution of a backup of the information stored in each of the processing units, or the execution of any other operations as explained above, such as the creation of a version. The request includes a trigger, which is an integer. The trigger may for instance be an integer of value "*k*". By sending a request to perform an action with a trigger of value "*k*", the controlling unit requests (or instructs) each of the processing units to perform an action upon receiving from the client unit a message with an identifier, or sequence number, equal to or larger than k.

The client unit sends to each of the processing units at least one stream of messages. The messages may for instance contain modifications of the content of a data entity stored in a distributed manner within the processing units. As mentioned above, the messages each further include an identifier, which is an integer. The identifier constitutes a sequence number of the message.

A stream of messages from the client unit to a processing unit is such that the messages are sent in ascending order of their respective identifier. Using a descending order is also possible and, in this case, the determination and triggering procedure determines whether the identifier of the message is equal to or smaller than the trigger, and, if so, the action is triggered. When limited to integers, using an ascending order corresponds to the first alternative and using a descending order corresponds to the second alternative. As mentioned above, the description is here limited the first alternative. The skilled person would be able to generalize the description to the second alternative.

Furthermore, each stream of messages from the client unit to a processing unit is such that the order of the messages in the stream is kept. In other words, if a message with an identifier or sequence number n, wherein n is an integer, and a message with an identifier *n*+*i*, wherein i is an integer larger than zero, are successively sent on the stream, i.e. the message with an identifier n being sent before the message with an identifier *n*+*i*, then the messages are received in this order by the processing unit. The streams are FIFO (First In, First Out) ordered.

The FIFO-ordered streams may be implemented through a reordering mechanism if the channels through which the messages are sent do not preserve the order of the messages.

In one embodiment, the client unit sends more than one stream of messages to the same processing unit. In this embodiment, the received messages, i.e. the messages received from the plurality of streams, are reordered by identifier before the processing unit performs the determining and triggering procedure.

Each processing unit is configured for receiving requests for performing an action and is further configured for receiving streams of messages. Upon receiving a request for performing an action, a processing unit retrieves from the request the trigger and retains it, e.g. stores it. Then upon receiving a message on a stream, the processing unit determines whether the identifier included in the message is equal to or larger than the trigger. If so, the action (such as for instance the creation of a backup or the referencing of a version) is executed. The action may for instance be, as mentioned above, the creation of a backup (if the processing units are data storage units), or the referencing of a version, i.e. recording the information needed to recreate the status at a point in time of a storage unit, or any other action.

The method of the invention does not guarantee the synchronization with respect to an absolute time reference of the actions associated with a request (i.e. a request for performing an action) and a trigger across processing units.

The reasons are as follows. On the one hand, the streams from the client unit to the processing units may not and need not offer any guarantee of delay. On the other hand, a message can be sent by the client unit to one processing unit with an identifier n, where the retained trigger is n. The processing unit then triggers the action, i.e. starts to execute it, because the identifier is equal to the trigger. Then, a few seconds (or more, or less) may elapse after a message with identifier n+i is sent by the client unit to another processing unit. The other processing unit, upon reception of the message with identifier n+i, determines that the identifier n+i is larger than the retained trigger n and then triggers the action. As a result, the action performed by the first processing unit and the action performed by the second processing unit are not performed at the same time, i.e. at the same time with respect to an absolute time reference or a common reference clock. The actions are however coordinated with respect to the message identifiers, acting as the heart beats of the distributed system, as far as the particular client unit sending the messages is concerned.

In other words, the method provides coordination relative to the order according to which the messages are sent from the client unit. The assumption is made that one processing unit does not affect other processing units, i.e. the processing units are independent from each other in that sense. Therefore, the relative coordination causes the actions of the processing units to be meaningfully coordinated from the client unit perspective.

Furthermore, the following additional assumption may be made. The coordinated actions should generally not be critically dependent on the absolute time at which they are or should be triggered and executed. This being said, the method may be used with a consensus finding procedure to control the time frame during which the actions have to be carried out. A consensus finding procedure according to one embodiment of the method of the invention for controlling the time frame during which the actions have to be carried out or, more generally, for controlling one or more parameters associated with the triggering and execution of the actions will be now described.

In one embodiment, the method includes a consensus finding procedure for determining whether the processing units agree to perform an action, for instance under specified or implied conditions. In this embodiment, the controlling unit sends messages to each of the processing units to ask them whether they agree to carry out an action. The messages are here called initialization messages.

In response to the initialization message, each of the processing units indicates to the controlling unit whether it agrees to perform the action. This being said, in one embodiment, an absence of any indication may be interpreted to be consent to perform the action. If the processing units, or at least a part of the processing units (e.g. a predetermined percentage of them), agree to perform action, the controlling unit may then send an agreement acknowledgement to the processing units informing them that the action can be performed. The agreement acknowledgement may include the request for performing the action including the trigger, as described above. Alternatively, the request for performing an action including the trigger may be included in the initialization message. The second sending procedure may therefore divided in two parts, an initialization part and an agreement acknowledgement part (or coordination part) before the determining and triggering procedure is executed, and therefore before the coordinated action is actually performed.

The consensus finding procedure of one embodiment of the method of the invention may be described as follows. According to this embodiment, the method further includes an initialization procedure for sending, by the controlling unit to each of the processing units, an initialization message for requesting whether each processing unit agrees to perform an action. The method further includes, for each of the processing units, a third receiving procedure for receiving, by the processing unit, the initialization message; and an agreement determining procedure for determining, by the processing unit, if it agrees to perform the action associated with the initialization message. The determining and triggering procedure is executed if the controlling unit determines that all or at least a part of the processing units agree to perform the action associated with the initialization message.

The controlling unit may determine that all or some of the processing units or, for instance, a predetermined percentage of them, do not agree to perform the coordinated actions. This may happen if it is determined by all or some of the processing units that specified of implied conditions, i.e. either specified in the initialization message or programmed in the processing units, are not satisfied. The controlling unit may then send a disagreement acknowledgement message to the processing units to instruct them not to perform the coordinated action, and optionally to discard the initialization message.

In one embodiment, the consensus finding procedure includes the negotiation of a trigger. In this embodiment, for instance, the controlling unit sends an initialization message proposing a trigger to the processing units. The processing units may then determine whether conditions are satisfied. The conditions may include the availability to perform an action, in terms of storage space, processing resources, responsiveness, state stability, etc. The condition may also include that the processing units are not locked or reserved by another client unit, are not in an abnormal state, etc.

In one embodiment, only one client unit sends streams of messages to the processing units.

In another embodiment, a plurality of client units send streams of messages to the processing units. In this later embodiment, the actions are coordinated on a per-client-unit basis. The coordination of one or more actions may be offered to one client unit at a time or to a plurality of client units provided that their ordered group does not overlap. There may be concurrent pending actions for one client unit or for a plurality of client units.

In one embodiment, the second receiving procedure, including the reception of a trigger, generates a lock on the processing unit. This may be used to ensure that the actions of one client unit are not disturbed by the action of another client unit when a coordinated action is to be triggered.

In one embodiment, many requests, each one for performing an action, are sent by a controlling unit to the processing units. In this embodiment, the plurality of corresponding triggers are simultaneously retained in the processing units. The determining and triggering procedure includes instructions for determining, by the processing unit, upon receiving a message whether the identifier of the message is equal or larger than any one of the triggers and, if so, for triggering, by the processing unit, the action or the plurality of actions corresponding to the triggers which have been found to be met.

In one embodiment, the processing units form a distributed storage system and the triggering of the action for each processing unit includes initiating a backup of their content, or creating a version, or changing state of a storage entity, for instance from read-write to read-only, or a combination of the above operations (non-exhaustive list), for instance at the time the action is triggered. This embodiment enables for instance carrying out a backup in a distributed data storage device without the need for a complex synchronization procedure involving the adjustment of the local clocks of each of the processing units with reference to a central, more stable and more precise clock.

In one embodiment, the action includes sending a message relating to the state of the processing units at the time the action is triggered wherein the message includes the trigger. This enables a central receiving unit to compare and analyze the received messages in a consistent manner with respect to the order of messages sent from the client unit to the processing units. This embodiment does not require any synchronization in time of the local clocks of the processing units with reference to an absolute time reference or a central clock. The skilled person would understand that the term "state" in the context of this embodiment, and more generally in the context of the invention, does not imply the synchronous nature of the system with respect to an absolute time reference.

In one embodiment, the second receiving procedure (for receiving, by the processing unit, the request) and a storing procedure for storing the trigger once received, are able of receiving and storing more than one trigger before triggering any of the corresponding actions. This embodiment enables the coordination of a plurality of actions of a plurality of processing units in a simple manner.

The processing units may for instance be mobile units, wireless units, wired units, manufacturing units in an assembly line work, sensors, sources of data streams, or data storage units within a distributed system.

The method of the invention may be applied in a computer environment in order to coordinate actions of computer devices without requiring synchronization of local clocks of the processing units performing portions of a task in a distributed system. The method of the invention may also be applied to a data storage environment for coordinating or orchestrating the creation of a backup of the data stored in the processing units or the creation of a new version in a distributed storage system. The method of the invention may also be applied in the context of a manufacturing environment for controlling the parameters of production of successive manufactured items.

In one embodiment, the request for performing an action includes a timeout. A processing unit receives the request for performing an action along with a timeout. If the processing unit does not receive a message with an identifier equal to or larger that the trigger included in the request before the timeout has expired, the retained trigger is discarded. The determining and triggering procedure is then completed without triggering an action. This embodiment enables to restrain the application in time of a particular trigger in the event of an abnormal condition.

The present invention also relates to a system configured for controlling processing units, and to a processing unit and a controlling unit configured to be used in such a system, as defined in the corresponding independent claims. Advantageous embodiments of the system, the processing unit and the controlling unit are described in the dependent claims.

### [Brief description of the drawings]

Embodiments of the present invention shall now be described, in conjunction with the appended figures, in which:
- Fig. 1: shows a schematic configuration of one embodiment of the method according to the invention;
- Fig. 2a and 2b: show schematic configurations of another embodiment of the method of the invention, comprising an initialization procedure before actually performing the coordination process;
- Fig. 3a, 3b, 4a, 4b: illustrate the invention through examples to explain the invention in practical terms;
- Fig. 5: shows a flow chart of the initialization process of one embodiment of the method of the invention;
- Fig. 6a and 6b: show schematic representations of two client units according to embodiments of the invention;
- Fig. 7a and 7b: show schematic representations of two controlling units according to embodiments of the invention; and
- Fig. 8a and 8b: show schematic representations of two processing units according to embodiments of the invention.

### [Detailed description]

The present invention shall now be described in conjunction with specific embodiments. It may be noted that these specific embodiments serve to provide the skilled person with a better understanding, but are not intended to in any way restrict the scope of the invention, which is defined by the appended claims. In particular, the embodiments described independently throughout the description can be combined to form further embodiments to the extent that they are not mutually exclusive.

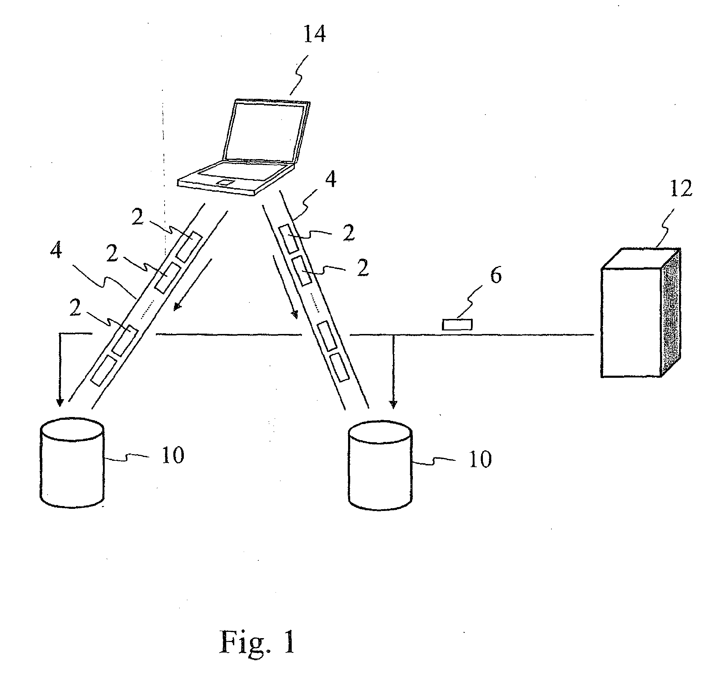

Fig. 1 shows a schematic configuration of one embodiment of the method of the invention. A client unit 14 sends streams 4 of messages 2 to two processing units 10. In the shown configuration, there is exactly one stream 4 of messages 2 originating from the client unit 14 to each one of the processing units 10.

Although this is not illustrated, there may be more than two processing units 10. There may also be more than one stream 4 of messages 2 originating from the client unit 14 to each of the processing units 10 (not illustrated either). In this case (more than one stream 4 of messages 2 originating from the client unit 14 to each of the processing units 10), a reordering mechanism may be provided to ensure that the order according to which the messages 2 are processed in the determining and triggering procedure by the processing units 10 corresponds to the order according to which the messages 2 are sent from the client unit 14.

Each of the messages 2 sent by the client unit 14 comprises an identifier or sequence number. The identifier may for instance be included in a predetermined field of the header of the messages 2. This identifier is an integer in the illustrated embodiment. The messages 2 are sent on the stream 4 with ascending identifiers.

An exemplary scenario may be described as follows. The client unit 14 first sends a message 2 with an identifier of value "k", wherein "*k*" is an integer, to a first processing unit 10 (bottom left of Fig. 1). Secondly, the client unit 14 sends a second message 2 to the first processing unit 10. This second message 2 includes an identifier of value "*k*+*1*". Thirdly, the client unit 14 sends a message 2 with an identifier of value "*k*+*2*" to a second processing unit 10 (bottom right of Fig. 1). Fourthly, the client unit 14 sends, substantially simultaneously, two messages 2, each one with an identifier of value "*k*+*3*", to both the first processing unit 10 and the second processing unit 10. Then, the client unit 14 sends a message 2 with an identifier of value "k+4" to the first processing unit 10. And so on.

The arrows next to the streams 4 on Fig. 1 illustrate the direction of transmission of the messages 2 from the client unit 14 to the processing units 10. The streams 4 are unidirectional in addition to be First-In-First-Out (FIFO) ordered.

In one embodiment, the messages 2 include information relating to modifications made by the client unit 14, acting as source of the streams 4, to a data entity stored in a distributed manner on the processing units 10 being in this case data storage units. The skilled person would however understand that this is only one embodiment. The processing units 10 may be processing units 10 other than data storage units.

The controlling unit 12 is configured for sending a request 6 for performing an action to each of the processing units 10. The overall purpose is to have the actions performed by the processing units 10 in a coordinated manner. This request 6 for performing an action comprises a trigger. The trigger may for instance be included in a predetermined field of the header of the messages 2. The trigger is an integer in the illustrated embodiment.

Each processing unit 10 retains the trigger transmitted by the control unit 12. Then, when a processing unit 10 receives a message 2 on the stream 4 from the client unit 14, the processing unit 10 determines if the identifier contained in the message 2 is equal or larger than the retained trigger. If so, the processing unit 10 triggers the action. The instructions for triggering and executing the action may be stored in the processing unit 10, or they may be transmitted along with the trigger in the request 6 transmitted from the controlling unit 12.

Optionally, the processing unit 10 may discard the trigger after the action has been triggered. This avoids any subsequent triggering of an action if undesired.

A client unit 14 may be a portable computer (as illustrated), a workstation, a server, or any other source of streams 4. The client unit 14 may be operated automatically or by a human through a user interface. The process may be transparent to the users. That is, the streams 4, the messages 2, the processing units 10, the controlling unit 12 and so on may generally be perceived by the user or computer system accessing the client unit 14 as inexistent. The appearance, functioning and behaviour of the client unit 14 may be such that the physical existence of the streams 4, the messages 2, the processing units 10, the controlling unit 12 and so on is generally not perceived by the users or computer systems accessing the client unit 14.

The streams 4 may be implemented in any network protocol, provided that the order of the messages 2 are preserved, and may pass through a network such as the internet or instead may simply be a transmission of messages 2 within a computer having several processing elements. If the streams 4 are merely transmitted within a computer, the client unit 14 may be the user interface and the processing units 10 may be configured as individual components used in a distributed system, such as a distributed storage system.

The controlling unit 12 may be in communication with the client unit 14 for properly starting an adequate action within the framework of the computer-implemented application executed by the client unit 14. In one embodiment, the controlling unit 12 and the client unit 14 form a single unit.

The method is not affected by the latency of the streams 4. In other words, the method is not affected by the transmission delays of messages 2 on the streams 4. Thus, there is no requirement of guarantee of delay for the stream transmission.

In one embodiment of the method and system of the invention, a recovering mechanism or fault tolerance mechanism is provided in order for the method and system to be capable to cope with packet loss or packet corruption. This relaxes the requirements in some fields of application of the invention. A skilled person would recognize that this can be carried out using for instance a packet acknowledgment technique, configured to send ACK (acknowledgment) signals.

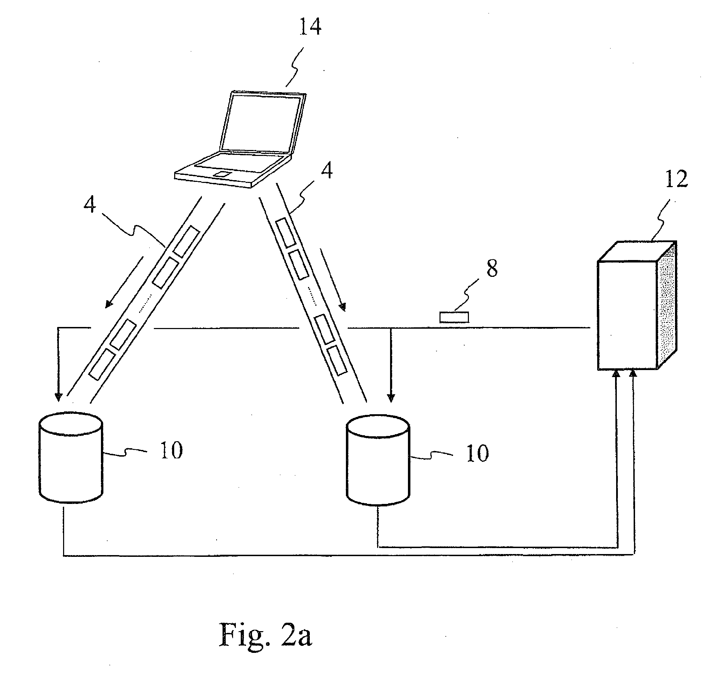

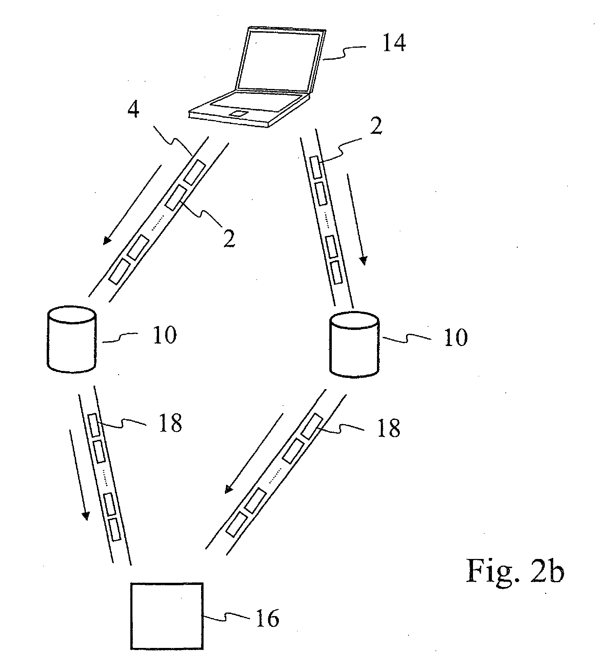

Figs. 2a and 2b show a schematic configuration of one embodiment of the method of the invention. In this embodiment, a process of finding a consensus on whether to carry out a coordinated action is illustrated. Fig. 2a illustrates the consensus finding, negotiation or agreement determination before reaching a state wherein the coordinated actions are ready to be triggered and executed. Fig. 2b illustrates a schematic configuration of the execution of a coordinated action after the trigger has been negotiated.

First, with reference to Fig. 2a, the controlling unit 12 initializes the coordination process by sending an initialization message 8 to the processing units 10. More precisely, two initialization messages 8 are sent, one to each processing unit 10. Upon receiving an initialization message 8, each processing unit 10 determines whether the action associated with the initialization message 8, optionally by testing whether conditions mentioned in the initialization message 8 are satisfied, can be performed or not.

If a processing unit 10 is in a state enabling it to perform the action, it sends back a response to the initialization message 8, which is an agreement message, to the controlling unit 12 (arrows originating from the processing units 10 and leading to the controlling unit 12).

In contrast, if the processing unit 10 cannot satisfy the coordination request, it sends a disagreement response to the controlling unit 12. This may happen for instance because a conflicting existing trigger is pending in relation to another client unit 14 (not illustrated), if the processing unit 10 is in an abnormal condition, or if the processing unit is locked or reserved, or has not enough memory space for performing the envisaged action, and so on.

Depending on the responses received from the processing units 10, the controlling unit 12 decides whether to actually request the action to be performed by the processing units 10. If all processing units 10 have responded to the controlling unit 12 that the envisaged action could be performed, the controlling unit 12 sends a request for performing an action or a confirmation message indicating that the action must be ready to be triggered, i.e. the determining and triggering procedure must be started. If the controlling unit 12 determines that only some of the processing units 10 have agreed to start the coordinated process for performing the action, the controlling unit 12 determines whether the number of processing units 10 which have agreed is sufficient in the context of the application executed by the client unit 14. If so, the controlling unit 12 sends a confirmation message that the action is effectively to be performed. Otherwise, the controlling unit 12 sends to the processing units 10 a disagreement message to indicate to the processing units 10 that the coordinated action should not be performed.

In one embodiment, a non-responding processing unit 10 is treated as a disagreeing processing unit 10. That is, the controlling unit 12 treats a non-responding processing unit 10 as if it had sent a disagreement message.

When initiating the coordination, i.e. within the process of finding a consensus on whether to perform a coordinated action, the controlling unit 12 may exchange information with the client unit 14. The information may for instance relate to the operational conditions under which the actions are to be performed (input) or whether the coordination of the action can be carried out (output). The client unit 14 may adapt its internal processing depending on the above mentioned exchanges.

If the controlling unit 12 determines that the coordinated action should not be performed, it may send a new initialization message 8 after a while, in an attempt to negotiate again the initialization of a coordinated action.

Fig. 2b illustrates the flow of messages 2 from the client unit 14 to the processing units 10 and the flow of messages 18 to a receiving unit 16. The receiving unit 16 is in charge of collecting and analyzing the messages 18 originating from the processing units 10, as a result of triggering the actions. In one embodiment, there is no such receiving unit 16.

In the event that a trigger is retained in each processing unit 10, once a processing unit 10 receives a message 2 on a stream 4 originating from the client unit 14 with an identifier equal or larger than the trigger, a message 18 is transmitted to the receiving unit 16. The message 18 transmitted from the processing unit 10 to the receiving unit 16 may advantageously include the trigger. This enables a consistent treatment of the content of the messages 18 with respect to the sequence of transmission of messages 2 from the client unit 14.

In one embodiment, the messages 2 originating from the client unit 14 include information relating to modifications made to a data unit stored in a distributed manner in the processing units 10, which are in this embodiment data storage units. When a particular message 2 contains an identifier which is equal or larger than a trigger retained in the processing unit 10, the processing unit 10 initiates a backup of the information contained in the processing unit 10. It then sends a message 18 to the receiving unit 16 including the trigger and the location where the backup can be found, or including the trigger and a confirmation that the backup has been performed.

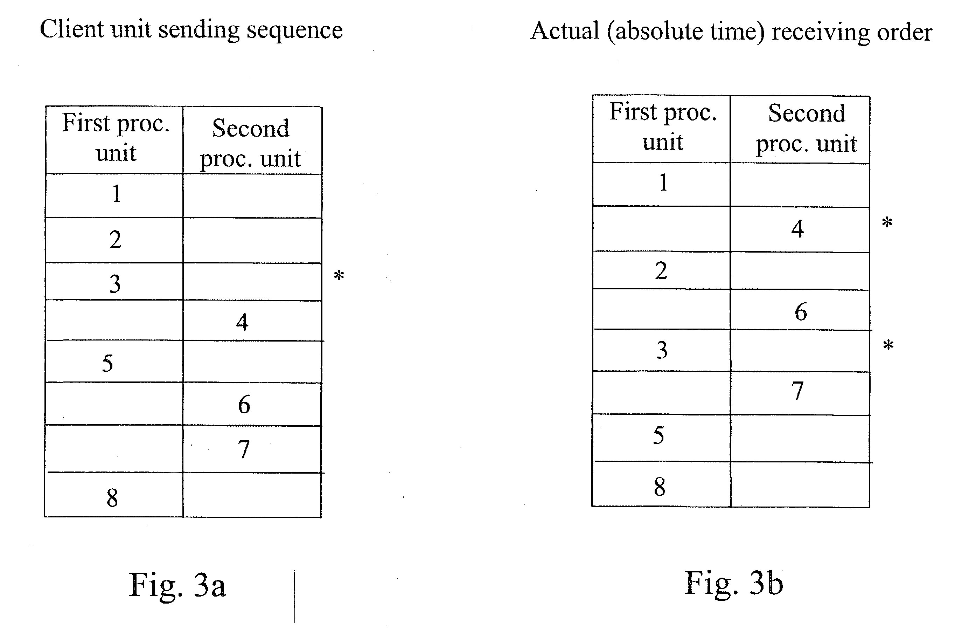

Figs. 3a and 3b show exemplary tables illustrating the mechanism of triggering of actions in one embodiment of the method of the invention. Let us assume that the client unit 14 sends eight messages 2 with identifiers of values "1" to "8" in ascending order. Let us further assume that a first processing unit ("First proc. unit" in Fig. 3a and 3b) 10 and a second processing unit ("Second proc. unit" in Fig. 3a and 3b) 10 have been instructed by the controlling unit 12 to perform an action corresponding to a trigger of value "3". Let us further assume that the client unit 14 sends three successive messages 2 with identifiers of value "1", "2" and "3" respectively to the first processing unit 10. Then, the client unit 14 sends a message 2 with an identifier of value "4" to the second processing unit 10, then a message 2 with an identifier of value "5" to the first processing unit 10, and so on.

Since the trigger is the integer of value "3" as mentioned above, the first processing unit 10 initiates the action upon receiving the message 2 with identifier of value "3", because the identifier is equal to the trigger. In contrast, the second processing unit 10 initiates the action upon receiving the message 2 with identifier of value "4", since it is the first message 2 received by the second processing unit 10 with an identifier which is equal or larger than the trigger of value "3".

The asterisk shown on the right-hand side of the table of Fig. 3a indicates that the trigger is the integer of value "3". While the lines of the table of Fig. 3a represent the client sending sequence of messages, Fig. 3b illustrates an exemplary receiving order in absolute time (i.e. with reference to a common reference clock) of the messages 2 from the client unit 14 to both the first and second processing units 10. As shown in Fig. 3b, while the message 2 with an identifier of value "3" was sent by the client unit 14 before the message 2 with identifier of value "4", the message 2 with identifier of value "3" is received by the first processing unit 10 in absolute time after the message 2 with identifier of value "4" is received by the second processing unit 10. This may be because the stream 4 originating from the client unit 14 to the first processing unit 10 experiences larger latencies than the stream 4 originating from the client unit 14 to the second processing unit 10.

As mentioned above, the action is triggered in the first processing unit 10 upon receiving the message 2 with identifier of value "3", because this identifier is equal to the trigger of value "3". In the second processing unit 10, the action is triggered upon receiving the message 2 with identifier of value "4", because this identifier is larger than the trigger of value "3". The two asterisks shown on the right-hand side of the table of Fig. 3b illustrate in this example when, in absolute time, the actions are triggered respectively in the second processing unit 10 (asterisk in next to the second line of the table) and the first processing unit 10 (asterisk in next to the fifth line of the table). In absolute time, the action is triggered in the second processing unit 10 before the action is triggered in the first processing unit 10. However, from the point of view of the client unit 14, it does not matter when exactly, in absolute time, the actions are triggered in the processing units 10. What matters is that the actions are triggered in a coordinate manner with respect to the identifiers (or sequence numbers) of the messages 2 sent from the client unit 14. This coordination with respect to the identifiers is guaranteed by the method of the invention, thus providing consistency with respect to the client unit sequence of transmission, for instance corresponding to modifications made to a distributed data entity.

The two asterisks in Fig. 3b illustrate that the coordinated actions in the first and second processing units 10 are performed at different absolute times, while the single asterisk shown in Fig. 3a shows that from the client unit perspective (i.e. with respect to the client unit sending sequence) the actions are performed by the processing units 10 in a coordinated manner. Since the second processing unit 10 does not receive a message 2 with an identifier of value "3", its state does not change and therefore performing the action when receiving the message 2 with identifier of value "4" is consistent with the state corresponding to the hypothetical reception (i.e. which does not take place) by the second processing unit 10 of a message 2 with identifier of value "3".

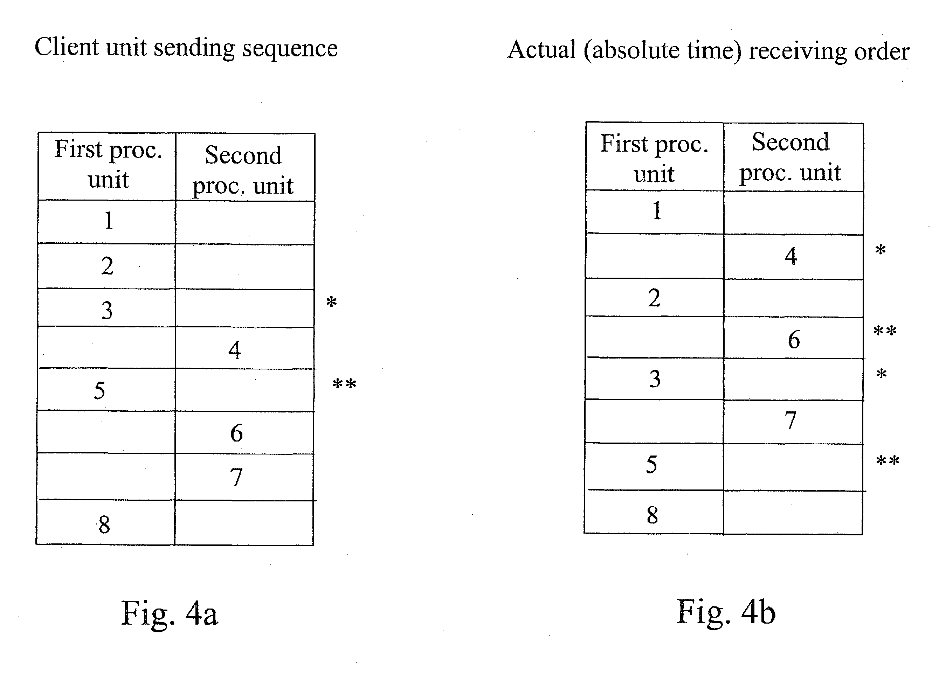

Figs. 4a and 4b illustrate another example, but with two concurrent triggers. The first trigger has a value "3" while the second trigger has a value "5". An action corresponds to each one of these triggers respectively. A first action is to be triggered upon receiving the trigger of value "3" and a second action is to be triggered upon receiving the trigger of value "5".

The order of triggering of the actions from a client unit perspective (i.e. with reference to the client unit sending sequence) is shown in Fig. 4a. The state when the first trigger of value "3" becomes satisfied is illustrated by a single asterisk next to the table. The state when the second trigger of value "5" becomes satisfied is illustrated by the double asterisk next to the table.

In absolute time, the action corresponding to the first trigger of value "3" is triggered by the second processing unit 10 before the triggering of the action by the first processing unit 10. Similarly, the action corresponding to the trigger of value "5" is triggered by the second processing unit 10 before the action is triggered by the first processing unit 10. It does not matter that the action corresponding to the trigger of value "5" is performed in absolute time by the second processing unit 10 before the action corresponding to the trigger of value "3" is performed by the first processing unit 10. What matters is the coordination with respect to the client sending sequence, not with respect to an absolute time reference (which is assumed to be unavailable).

Referring back to Fig. 2b, it can be seen that identifiers may be used in two classes of messages. Identifiers must be used in messages 2 originating from the client unit 14 to the processing units 10. Identifiers may be used in messages 18 originating from the processing units 10 (upon triggering of an action) to the receiving unit 16.

Optionally, the processing units 10 may send more messages 18 to the receiving unit 16 than merely when an action is triggered. For instance, after sending a message 18 upon triggering an action, a processing unit 10 may send at regular intervals with respect to an internal clock of the processing unit 10 subsequent messages 18 wherein the value of the identifier is incremented for each subsequent message 18 transmitted from the processing unit 10 to the receiving unit 16.

A third class of messages are those used in the initialization procedure of the coordination process: the messages 8 transmitted from the controlling unit 12 to the processing units 10, and the messages (not illustrated) transmitted from the processing units 10 to the controlling unit 12.

Messages of any class may comprise an expiration value, after which the message is to be disregarded by any of the units of the system.

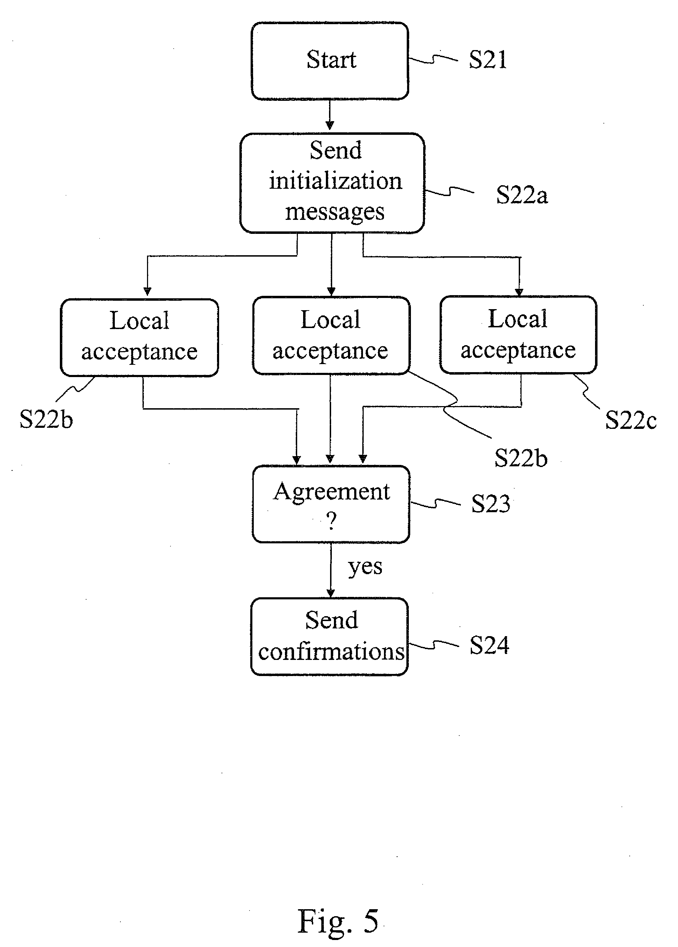

Fig. 5 is a flow chart of an initialization procedure for negotiating coordination among processing units 10 and a receiving unit 16 according to an embodiment of the invention.

The controlling unit 12 starts S21 the coordination process. To this end, initialization messages 8 are sent s22a to the processing units 10 and optionally to the receiving unit 16. The processing units 10 then determine S22b, and optionally the receiving unit 16 determines s22c, whether locally, i.e. within the processing units 10 or within the receiving unit 16, the envisaged coordination can be accepted. These procedures (labelled in Fig. 5 as "local acceptance" procedures) may include testing whether some conditions specified in the initialization message 8 are satisfied. The processing units 10 and the receiving unit 16 then express the result of the determination by sending a response to the controlling unit 12 to indicate whether they can accept the envisaged coordination.

Next, the controlling unit 12 determines s23 whether there is an agreement to perform the coordination. If so, the controlling unit 12 sends s24 confirmations to the processing units 10 and to the receiving unit 16 that the coordination should take place. Otherwise, if there is no agreement, the controlling unit 12 may inform the processing units 10 and the receiving unit 16 accordingly, for example by sending discard messages (not illustrated) to the processing units 10 and to the receiving unit 16 to indicated that the coordination should take place.

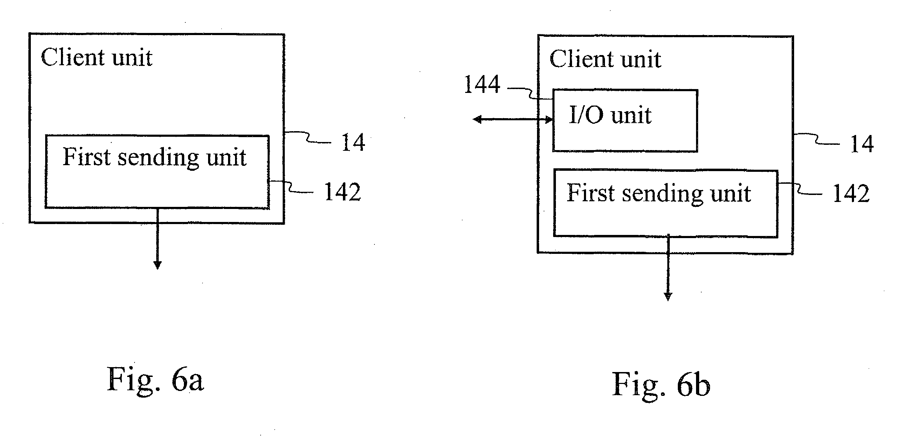

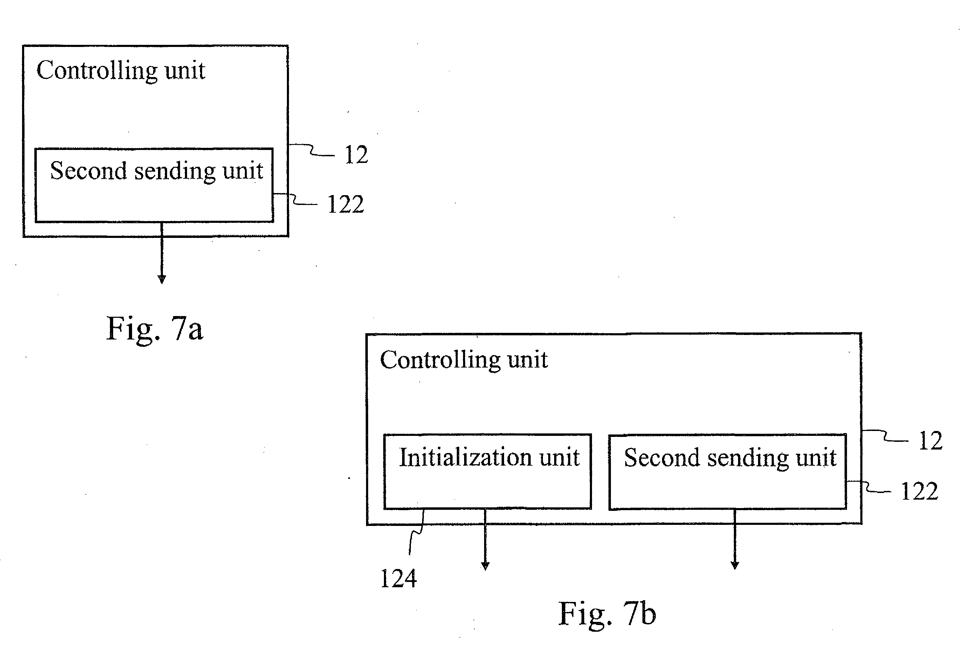

The client unit 14 schematically illustrated on Fig. 6a, the controlling unit 12 schematically illustrated on Fig. 7a and the processing units 10, one of which being schematically illustrated on 8a, illustrates an embodiment of the system according to the invention. The system will be now described in more details with reference to these Figures.

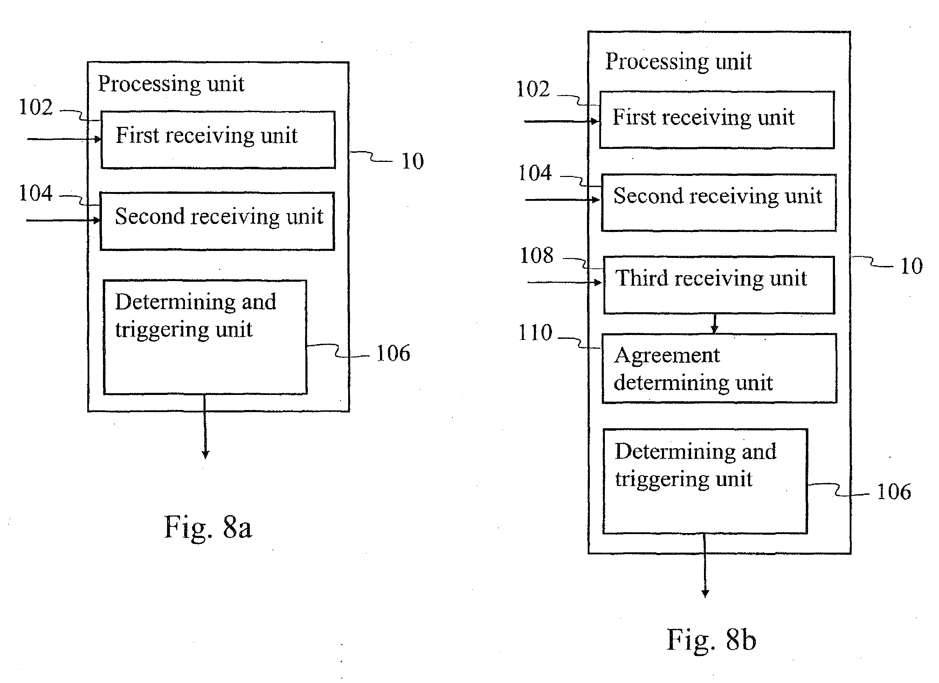

The system is configured for controlling processing units 10. The system includes a plurality of processing units 10 (Fig. 8a). The system further includes a client unit 14 (Fig. 6a) including a first sending unit 142 configured for sending (as illustrated by the arrow originating from the first sending unit 142) at least one stream 4 of messages 2 to each of the processing units 10. Each message 2 includes an identifier, the identifier is a member of an ordered group, and the messages 2 are sent in an order such that, if a first message 2 is sent before a second message 2, the identifier of the first message 2 is smaller than the identifier of the second message 2, or, in an alternative, the identifier of the first message 2 is larger than the identifier of the second message 2.

The system further includes a controlling unit 12 (Fig. 7a) including a second sending unit 122 configured for sending (as illustrated by the arrow originating from the second sending unit 122) a request 6 for performing an action to all processing units 10. The request 6 includes a trigger, and the trigger is a member of the ordered group.

Each of the processing units 10 (Fig. 8a) includes a first receiving unit 102 configured for receiving (as illustrated by the arrow leading to the first receiving unit 102) the at least one stream 4 of messages 2. Each of the processing units 10 further includes a second receiving unit 104 configured for receiving (as illustrated by the arrow leading to the first receiving unit 104) the request 6. Finally, each of the processing units 10 further includes a determining and triggering unit 106 configured for determining upon receiving (as illustrated by the arrow leading to the first receiving unit 102) a message 2 if the identifier of the message 2 is equal to or larger than the trigger and, if so, for triggering the action, or, in the alternative, configured for determining upon receiving a message 2, if the identifier of the message 2 is smaller than or equal to the trigger and, if so, for triggering the action.

Fig. 6b illustrates an embodiment of the client unit 14 wherein an input and output (I/O) unit 144 is further provided. The input and output (I/O) unit 144 is used for interacting (as illustrated by the double arrow originating and leading to the first receiving unit 104) with a computer process or a human. In the later case, the input and output (I/O) 144 is a user interface, such as a keyboard, a computer screen, a mouse, and the like. The client unit 14 includes a computer processing unit (CPU) and a memory unit (such as a random-access memory - RAM), which are not illustrated.

Fig. 7b illustrates an embodiment of the controlling unit 12 wherein an initialization unit 124 is further provided. The initialization unit 124 is configured for sending (as illustrated by the arrow originating from the initialization unit 124) to each of the processing units 10 an initialization message 8 for requesting whether each processing unit 10 agrees to perform an action, as explained above.

Fig. 8b illustrates an embodiment of the processing unit 10 wherein a third receiving unit 108 and an agreement determining unit 110 are further provided. The third receiving unit 108 is configured for receiving (as illustrated by the arrow leading from the third receiving unit 108) an initialization message 8, as described above. The agreement determining unit 110 for determining (using among other things the initialization message 8, as illustrated by the arrow originating from the third receiving unit 108 and leading to the agreement determining unit 110) if the processing unit 10 agrees to perform the action associated with the initialization message 8.

In one embodiment, the method and system of the invention is applied in a divide and conquer manner (See Divide and *conquer algorithm* (2007, November 26). In Wikipedia, The Free Encyclopedia. Retrieved 10:12, December 3, 2007, from http://en.wikipedia.org/w/index.php?title=Divide and conquer algorithm&oldid=173796198), for instance implemented in a recursive manner. If an action should take place in a coordinated manner in a large distributed computer system, speeding up the execution of a coordinated action may be obtained by dividing the method in a divide and conquer manner, thus improving performance.

The task of sending, by a controlling unit 12, requests for performing an action and the collection of agreement or disagreement responses may be recursively delegated to a subset of nodes (implementing functions of the controlling unit 12 and possibly also of the processing units 10). The communication overhead (measured by the amount of messages, and thus the amount of data sent through the whole network) over the network may therefore be reduced. By individually coordinating the subsets of nodes when carrying out this embodiment of the invention, the amount of waiting time may be reduced by parallelizing the coordination requests. Other options to recursively apply or use the method according to this embodiment could be implemented.

This may be illustrated by an exemplary traffic light management system. Let us imagine that, in such a system, an action consisting in updating the software running within or a parameter or a set of parameters stored in each individual traffic light needs to be performed in a coordinated manner. Each one of two cities are connected by two nodes, while the nodes within the city themselves are strongly connected, by at least 4 nodes each. For the coordinated action to take place, the request for performing the action is sent by the city node "Frankfurt". The city node "Frankfurt" sends its requests to city nodes "Darmstadt" and "Kassel", while the city node "Darmstadt" sends its requests to city nodes "Koblenz" and "Freiburg", and so on. The action is coordinated by coordinating each city node independently first, and then by sending the preliminary results (agreement or disagreement) to the two neighbour city nodes. In other words, a tree structure is built wherein the tree's nodes are each coordinated systems.

The method of the invention has the advantage that it is not necessary to interrupt the input/output (I/O) processing in the affected components and storage entities, i.e. in the processing units 10, of the whole system to achieve the coordination. Interrupting the input/output (I/O) processing in the processing units 10 might induce further issues from a control perspective. For example, it may be necessary to provide additional processing capabilities to handle erroneous input/output (I/O) timeouts resulting from timeouts while carrying out the coordination, etc. Where the term "unit" is used herewith (for instance in "client unit", "processing unit", "controlling unit" or "receiving unit"), no restriction is made regarding how distributed the constituent elements of a unit may be. That is, the constituent elements of a unit may be distributed in different software or hardware components or devices for bringing about the intended function. Furthermore, some units may be gathered together for performing their functions by means of a combined, single unit. A controlling unit 12 and a receiving unit 16 may for instance be gathered for providing their intended functionalities in a combined manner. Likewise, other combinations of units are possible, such as for instance combining a client unit 14 and a controlling unit 12, combining a client unit 14, a controlling unit 12 and a receiving unit 16, or combining a controlling unit 12 and one particular processing unit 10.

In view of the above, the term "system" is herewith to be understood in a broad manner as a set of interacting, cooperating or interdependent technical units or entities forming an integrated whole.

Although the present invention has been described on the basis of detailed examples, the detailed examples only serve to provide the skilled person with a better understanding, and are not intended to limit the scope of the invention. The scope of the invention is much rather defined by the appended claims.

## Claims

1. Method for controlling processing units (10), including
a first sending procedure for sending, by a client unit (14), at least one stream (4) of messages (2) to each of the processing units (10), wherein
each message (2) includes an identifier,
the identifier is a member of an ordered group,
the messages (2) are sent in an order such that, if a first message (2) is sent before a second message (2), the identifier of the first message (2) is smaller than the identifier of the second message (2), or, in an alternative, the identifier of the first message (2) is larger than the identifier of the second message (2), and
each stream (4) of messages (2) from the client unit (14) to a processing unit (10) is such that the messages (2) of the stream (4) are received by the processing unit (10) in the same order as they were sent by the client unit (10);
a second sending procedure for sending, by a controlling unit (12), a request (6) for performing an action to all processing units (10), wherein
the request (6) includes a trigger, and
the trigger is a member of the ordered group; and
for each of the processing units (10),
a first receiving procedure for receiving, by the processing unit (10), the at least one stream (4) of messages (2);
a second receiving procedure for receiving, by the processing unit (10), the request (6); and
a determining and triggering procedure for determining, by the processing unit (10), upon receiving a message (2), if the identifier of the message (2) is equal to or larger than the trigger and, if so, for triggering, by the processing unit (10), the action,
or, in the alternative, for determining, by the processing unit (10), upon receiving a message (2), if the identifier of the message (2) is smaller than or equal to the trigger and, if so, for triggering, by the processing unit (10), the action.

2. Method of claim 1, wherein
a channel through which messages (2) of a stream (4) are sent does not necessarily preserve the order of the messages (2) and
the streams (4) are implemented through a reordering mechanism.

3. Method of claim 1 or 2, wherein
the ordered group is the set of integers; and
in the first sending procedure, the messages are sent in ascending order of their respective identifier or, in the alternative, the messages are sent in descending order of their respective identifier.

4. Method according to any one of the preceding claims, wherein the processing units (10) form a distributed storage system and the triggering of the action in each processing unit (10) includes any one of
- starting a backup of its content,
- creating a version,
- changing state of a storage entity, and
- a combination of the above operations.

5. Method according to any one of the preceding claims, wherein triggering includes sending a message (18) relating to the state of the processing unit (10) at the time the action is triggered, wherein the message (18) includes the trigger.

6. Method according to any one of the preceding claims, further including a storing procedure for storing, by the processing unit (10), the trigger included in the request (6), and, wherein the second receiving procedure and the storing procedure are capable of receiving and storing more than one trigger before triggering any of the corresponding actions.

7. Method according to any one of the preceding claims, further including
an initialization procedure for sending, by the controlling unit (12) to each of the processing units (10), an initialization message (8) for requesting whether each processing unit (10) agrees to perform an action;
for each of the processing units (10),
a third receiving procedure for receiving, by the processing unit (10), the initialization message (8); and
an agreement determining procedure for determining, by the processing unit (10), if it agrees to perform the action associated with the initialization message (8);
wherein the determining and triggering procedure is performed if the controlling unit (12) determines that all or at least a part of the processing units (10) agree to perform the action associated with the initialization message (8) and after an agreement acknowledgment message is sent by the controlling unit (12) to the processing units (10).

8. System configured for controlling processing units (10), including a plurality of processing units (10);
a client unit (14) including a first sending unit (142) configured for sending at least one stream (4) of messages (2) to each of the processing units (10), wherein
each message (2) includes an identifier,
the identifier is a member of an ordered group, the messages (2) are sent in an order such that, if a first message (2) is sent before a second message (2), the identifier of the first message (2) is smaller than the identifier of the second message (2), or, in an alternative, the identifier of the first message (2) is larger than the identifier of the second message (2), and
each stream (4) of messages (2) from the client unit (14) to a processing unit (10) is such that the messages (2) of the stream (4) are received by the processing unit (10) in the same order as they were sent by the client unit (10); and
a controlling unit (12) including a second sending unit (122) configured for sending a request (6) for performing an action to all processing units (10),
wherein
the request (6) includes a trigger, and
the trigger is a member of the ordered group;
wherein each of the processing units (10) includes
a first receiving unit (102) configured for receiving the at least one stream (4) of messages (2);
a second receiving unit (104) configured for receiving the request (6); and
a determining and triggering unit (106) configured for determining upon receiving a message (2) if the identifier of the message (2) is equal to or larger than the trigger and, if so, for triggering the action,
or, in the alternative, configured for determining upon receiving a message (2), if the identifier of the message (2) is smaller than or equal to the trigger and, if so, for triggering the action.

9. System of claim 8, wherein
a channel through which messages (2) of a stream (4) are sent does not necessarily preserve the order of the messages (2) and
the streams (4) are implemented through a reordering mechanism.

10. System of claim 8 or 9, wherein the processing units (10) form a distributed storage system and the triggering of the action in each processing unit (10) includes any one of
- starting a backup of its content,
- creating a version,
- changing state of a storage entity, and
- a combination of the above operations.

11. System according to any one of claims 8 or 10, wherein
the processing unit (10) further includes a storing unit configured for storing the trigger included in the request (6), and
the second receiving unit (104) and the storing unit are configured for being capable of receiving and storing more than one trigger before triggering any of the corresponding actions.

12. System according to any one of claims 8 to 11, wherein
the controlling unit (12) further includes an initialization unit (124) configured for sending to each of the processing units (10) an initialization message (8) for requesting whether each processing unit (10) agrees to perform an action; and
each of the processing units (10) further includes
a third receiving unit (108) configured for receiving the initialization message (8); and
an agreement determining unit (110) configured for determining if it agrees to perform the action associated with the initialization message (8);
wherein the determining and triggering unit (106) is configured to perform the action if the controlling unit (12) determines that all or at least a part of the processing units (10) agree to perform the action associated with the initialization message (8) and after an agreement acknowledgment message is sent by the controlling unit (12) to the processing units (10).

13. Processing unit (10) configured to be used in a system for controlling the processing unit (10) and at least one other processing units (10), the system including
a client unit (14) including
a first sending unit (142) configured for sending at least one stream (4) of messages (2) to each of the processing unit (10) and the at least one other processing units (10), wherein
each message (2) includes an identifier,
the identifier is a member of an ordered group,
the messages (2) are sent in an order such that, if a first message (2) is sent before a second message (2), the identifier of the first message (2) is smaller than the identifier of the second message (2), or, in an alternative, the identifier of the first message (2) is larger than the identifier of the second message (2), and
each stream (4) of messages (2) from the client unit (14) to a processing unit (10) is such that the messages (2) of the stream (4) are received by the processing unit (10) in the same order as they were sent by the client unit (10); and
a controlling unit (12) including a second sending unit (122) configured for sending a request (6) for performing an action to the processing unit (10) and the at least one other processing units (10), wherein
the request (6) includes a trigger, and
the trigger is a member of the ordered group;
the processing unit (10) including
a first receiving unit (102) configured for receiving the at least one stream (4) of messages (2);
a second receiving unit (104) configured for receiving the request (6); and
a determining and triggering unit (106) configured for determining upon receiving a message (2) if the identifier of the message (2) is equal to or larger than the trigger and, if so, for triggering the action,
or, in the alternative, configured for determining upon receiving a message (2), if the identifier of the message (2) is smaller than or equal to the trigger and, if so, for triggering the action.

14. Processing unit (10) of claim 13, forming with the at least one other processing units (10) a distributed storage system and wherein the triggering of the action in each processing unit (10) includes any one of
- starting a backup of its content,
- creating a version,
- changing state of a storage entity, and
- a combination of the above operations.

15. Processing unit (10) of claim 13 or 14, wherein
the controlling unit (12) further includes an initialization unit (124) configured for sending to each one of the processing unit (10) and the at least one other processing units (10) an initialization message (8) for requesting whether each processing unit (10) agrees to perform an action; and
the processing unit (10) further including
a third receiving unit (108) configured for receiving the initialization message (8); and
an agreement determining unit (110) configured for determining if it agrees to perform the action associated with the initialization message (8);
wherein the determining and triggering unit (106) is configured to perform the action if the controlling unit (12) determines that all or at least a part of the processing units (10) agree to perform the action associated with the initialization message (8) and after an agreement acknowledgment message is sent by the controlling unit (12) to the processing units (10).

16. Controlling unit (12) configured to be used in a system for controlling processing units (10), the system including
a client unit (14) including a first sending unit (142) configured for sending at least one stream (4) of messages (2) to each of the processing units (10), wherein
each message (2) includes an identifier,
the identifier is a member of an ordered group, and the messages (2) are sent in an order such that, if a first message (2) is sent before a second message (2), the identifier of the first message (2) is smaller than the identifier of the second message (2), or, in an alternative, the identifier of the first message (2) is larger than the identifier of the second message (2), and
each stream (4) of messages (2) from the client unit (14) to a processing unit (10) is such that the messages (2) of the stream (4) are received by the processing unit (10) in the same order as they were sent by the client unit (10);
the controlling unit (12) including a second sending unit (122) configured for sending a request (6) for performing an action to all processing units (10), wherein
the request (6) includes a trigger, and
the trigger is a member of the ordered group;
wherein each of the processing units (10) includes
a first receiving unit (102) configured for receiving the at least one stream (4) of messages (2);
a second receiving unit (104) configured for receiving the request (6); and
a determining and triggering unit (106) configured for determining upon receiving a message (2) if the identifier of the message (2) is equal to or larger than the trigger and, if so, for triggering the action,
or, in the alternative, configured for determining upon receiving a message (2), if the identifier of the message (2) is smaller than or equal to the trigger and, if so, for triggering the action.

17. Controlling unit (12) of claim 16 further including an initialization unit (124) configured for sending to each of the processing units (10) an initialization message (8) for requesting whether each processing unit (10) agrees to perform an action;
wherein each of the processing units (10) further includes
a third receiving unit (108) configured for receiving the initialization message (8); and
an agreement determining unit (110) configured for determining if it agrees to perform the action associated with the initialization message (8); and
wherein the determining and triggering unit (106) is configured to perform the action if the controlling unit (12) determines that all or at least a part of the processing units (10) agree to perform the action associated with the initialization message (8) and after an agreement acknowledgment message is sent by the controlling unit (12) to the processing units (10).

## Patentansprüche

1. Verfahren zur Kontrolle von Verarbeitungseinheiten (10), umfassend
eine erste Sendeprozedur zum Senden, durch eine Client-Einheit (14), mindestens eines Stroms (4) von Nachrichten (2) an jede der Verarbeitungseinheiten (10), wobei
jede Nachricht (2) eine Kennung umfasst,
die Kennung ein Element einer geordneten Gruppe ist,
die Nachrichten (2) in einer solchen Reihenfolge gesendet werden, dass, wenn eine erste Nachricht (2) vor einer zweiten Nachricht (2) gesendet wird, die Kennung der ersten Nachricht (2) kleiner ist als die Kennung der zweiten Nachricht (2), oder, alternativ, die Kennung der ersten Nachricht (2) größer ist als die Kennung der zweiten Nachricht (2), und
jeder Strom (4) von Nachrichten (2) von der Client-Einheit (14) an eine Verarbeitungseinheit (10) so beschaffen ist, dass die Nachrichten (2) des Stroms (4) von der Verarbeitungseinheit (10) in derselben Reihenfolge empfangen werden, in der sie von der Client-Einheit (10) gesendet wurden;
eine zweite Sendeprozedur zum Senden, durch eine Kontrolleinheit (12), einer Aufforderung (6) an alle Verarbeitungseinheiten (10) zur Ausführung einer Aktion, wobei
die Aufforderung (6) einen Trigger umfasst, und
der Trigger ein Element der geordneten Gruppe ist; und
für jede der Verarbeitungseinheiten (10)
eine erste Empfangsprozedur zum Empfang, durch die Verarbeitungseinheit (10), des mindestens einen Stroms (4) von Nachrichten (2);
eine zweite Empfangsprozedur zum Empfang, durch die Verarbeitungseinheit (10), der Aufforderung (6); und
eine Bestimmungs- und Auslöseprozedur zur Bestimmung, durch die Verarbeitungseinheit (10), bei Empfang einer Nachricht (2), ob die Kennung der Nachricht (2) gleich oder größer als der Trigger ist und wenn ja, zur Auslösung der Aktion durch die Verarbeitungseinheit (10),
oder, alternativ, zur Bestimmung, durch die Verarbeitungseinheit (10), bei Empfang einer Nachricht (2), ob die Kennung der Nachricht (2) kleiner oder gleich dem Trigger ist und wenn ja, zur Auslösung der Aktion durch die Verarbeitungseinheit (10).

2. Verfahren gemäß Anspruch 1, wobei
ein Kanal, durch den Nachrichten (2) eines Stroms (4) gesendet werden, nicht unbedingt die Reihenfolge der Nachrichten (2) beibehält und
die Ströme (4) durch einen Umordnungsmechanismus implementiert werden.

3. Verfahren gemäß Anspruch 1 oder 2, wobei
die geordnete Gruppe die Menge der ganzen Zahlen ist; und
in der ersten Sendeprozedur die Nachrichten in aufsteigender Folge ihrer jeweiligen Kennung oder, alternativ, die Nachrichten in absteigender Folge ihrer jeweiligen Kennung gesendet werden.

4. Verfahren gemäß einem der vorhergehenden Ansprüche, wobei die Verarbeitungseinheiten (10) ein verteiltes Speichersystem bilden und die Auslösung der Aktion in jeder Verarbeitungseinheit (10) eines von Folgendem umfasst:
- Start einer Sicherung ihres Inhalts,
- Anlegen einer Version,
- Zustandsänderung einer Speicherentität, und
- eine Kombination der obigen Operationen.

5. Verfahren gemäß einem der vorhergehenden Ansprüche, wobei die Auslösung das Senden einer Nachricht (18) über den Zustand der Verarbeitungseinheit (10) zum Zeitpunkt der Auslösung der Aktion umfasst, wobei die Nachricht (18) den Trigger umfasst.

6. Verfahren gemäß einem der vorhergehenden Ansprüche, ferner umfassend eine Speicherprozedur zum Speichern, durch die Verarbeitungseinheit (10), des in der Aufforderung (6) enthaltenen Triggers, und wobei die zweite Empfangsprozedur und die Speicherprozedur in der Lage sind, vor der Auslösung einer der entsprechenden Aktionen mehr als einen Trigger zu empfangen und zu speichern.

7. Verfahren gemäß einem der vorhergehenden Ansprüche, ferner umfassend eine Initialisierungsprozedur zum Senden, durch die Kontrolleinheit (12), einer Initialisierungsnachricht (8) an jede der Verarbeitungseinheiten (10), zur Abfrage, ob die jeweilige Verarbeitungseinheit (10) zustimmt, eine Aktion auszuführen;
für jede der Verarbeitungseinheiten (10)
eine dritte Empfangsprozedur zum Empfang, durch die Verarbeitungseinheit (10), der Initialisierungsnachricht (8); und
eine Zustimmungsbestimmungsprozedur zur Bestimmung, durch die Verarbeitungseinheit (10), ob sie zustimmt, die der Initialisierungsnachricht (8) zugeordnete Aktion auszuführen;
wobei die Bestimmungs- und Auslöseprozedur ausgeführt wird, wenn die Kontrolleinheit (12) feststellt, dass alle oder zumindest ein Teil der Verarbeitungseinheiten (10) zustimmt, die der Initialisierungsnachricht (8) zugeordnete Aktion auszuführen, und nachdem die Kontrolleinheit (12) eine Zustimmungsbestätigungsnachricht an die Verarbeitungseinheiten (10) gesendet hat.

8. System, konfiguriert zur Kontrolle von Verarbeitungseinheiten (10), umfassend
eine Mehrzahl von Verarbeitungseinheiten (10);
eine Client-Einheit (14), umfassend eine erste Sendeeinheit (142), konfiguriert zum Senden mindestens eines Stroms (4) von Nachrichten (2) an jede der Verarbeitungseinheiten (10), wobei
jede Nachricht (2) eine Kennung umfasst,
die Kennung ein Element einer geordneten Gruppe ist,
die Nachrichten (2) in einer solchen Reihenfolge gesendet werden, dass, wenn eine erste Nachricht (2) vor einer zweiten Nachricht (2) gesendet wird, die Kennung der ersten Nachricht (2) kleiner ist als die Kennung der zweiten Nachricht (2), oder, alternativ, die Kennung der ersten Nachricht (2) größer ist als die Kennung der zweiten Nachricht (2), und
jeder Strom (4) von Nachrichten (2) von der Client-Einheit (14) an eine Verarbeitungseinheit (10) so beschaffen ist, dass die Nachrichten (2) des Stroms (4) von der Verarbeitungseinheit (10) in derselben Reihenfolge empfangen werden, in der sie von der Client-Einheit (10) gesendet wurden; und
eine Kontrolleinheit (12), umfassend eine zweite Sendeeinheit (122), die konfiguriert ist zum Senden einer Aufforderung (6) an alle Verarbeitungseinheiten (10) zur Ausführung einer Aktion, wobei
die Aufforderung (6) einen Trigger umfasst, und
der Trigger ein Element der geordneten Gruppe ist;
wobei jede der Verarbeitungseinheiten (10) Folgendes umfasst:
eine erste Empfangseinheit (102), konfiguriert zum Empfang des mindestens einen Stroms (4) von Nachrichten (2);
eine zweite Empfangseinheit (104), konfiguriert zum Empfang der Aufforderung (6); und
eine Bestimmungs- und Auslöseeinheit (106), konfiguriert zur Bestimmung, bei Empfang einer Nachricht (2), ob die Kennung der Nachricht (2) gleich oder größer als der Trigger ist und wenn ja, zur Auslösung der Aktion,
oder, alternativ, konfiguriert zur Bestimmung, bei Empfang einer Nachricht (2), ob die Kennung der Nachricht (2) kleiner oder gleich dem Trigger ist, und wenn ja, zur Auslösung der Aktion.

9. System gemäß Anspruch 8, wobei
ein Kanal, durch den Nachrichten (2) eines Stroms (4) gesendet werden, nicht unbedingt die Reihenfolge der Nachrichten (2) beibehält und
die Ströme (4) durch einen Umordnungsmechanismus implementiert werden.

10. System gemäß Anspruch 8 oder 9, wobei die Verarbeitungseinheiten (10) ein verteiltes Speichersystem bilden und die Auslösung der Aktion in jeder Verarbeitungseinheit (10) eines von Folgendem umfasst:
- Start einer Sicherung ihres Inhalts,
- Anlegen einer Version,
- Zustandsänderung einer Speicherentität, und
- eine Kombination der obigen Operationen.

11. System gemäß einem der Ansprüche 8 bis 10, wobei
die Verarbeitungseinheit (10) ferner eine Speichereinheit umfasst, die für die Speicherung des in der Aufforderung (6) enthaltenen Triggers konfiguriert ist, und
die zweite Empfangseinheit (104) und die Speichereinheit so konfiguriert sind,
dass sie in der Lage sind, vor der Auslösung einer der entsprechenden Aktionen mehr als einen Trigger zu empfangen und zu speichern.

12. System gemäß einem der Ansprüche 8 bis 11, wobei
die Kontrolleinheit (12) ferner eine Initialisierungseinheit (124) umfasst, die konfiguriert ist zum Senden einer Initialisierungsnachricht (8) an jede der Verarbeitungseinheiten (10), zur Abfrage, ob die jeweilige Verarbeitungseinheit (10) zustimmt, eine Aktion auszuführen;
jede der Verarbeitungseinheiten (10) ferner Folgendes umfasst:
eine dritte Empfangseinheit (108), konfiguriert zum Empfang der Initialisierungsnachricht (8); und
eine Zustimmungsbestimmungseinheit (110), konfiguriert zur Bestimmung, ob sie zustimmt, die der Initialisierungsnachricht (8) zugeordnete Aktion auszuführen;
wobei die Bestimmungs- und Auslöseeinheit (106) so konfiguriert ist, dass sie die Aktion ausführt, wenn die Kontrolleinheit (12) feststellt, dass alle oder zumindest ein Teil der Verarbeitungseinheiten (10) zustimmt, die der Initialisierungsnachricht (8) zugeordnete Aktion auszuführen, und nachdem die Kontrolleinheit (12) eine Zustimmungsbestätigungsnachricht an die Verarbeitungseinheiten (10) gesendet hat.

13. Verarbeitungseinheit (10), konfiguriert zur Verwendung in einem System zur Kontrolle der Verarbeitungseinheit (10) und mindestens einer weiteren Verarbeitungseinheit (10), wobei das System Folgendes umfasst:
eine Client-Einheit (14), umfassend
eine erste Sendeeinheit (142), konfiguriert zum Senden mindestens eines Stroms (4) von Nachrichten (2) an sowohl die Verarbeitungseinheit (10) als auch an die mindestens eine weitere Verarbeitungseinheit (10), wobei
jede Nachricht (2) eine Kennung umfasst,
die Kennung ein Element einer geordneten Gruppe ist,
die Nachrichten (2) in einer solchen Reihenfolge gesendet werden, dass, wenn eine erste Nachricht (2) vor einer zweiten Nachricht (2) gesendet wird, die Kennung der ersten Nachricht (2) kleiner ist als die Kennung der zweiten Nachricht (2), oder, alternativ, die Kennung der ersten Nachricht (2) größer ist als die Kennung der zweiten Nachricht (2), und
jeder Strom (4) von Nachrichten (2) von der Client-Einheit (14) an eine Verarbeitungseinheit (10) so beschaffen ist, dass die Nachrichten (2) des Stroms (4) von der Verarbeitungseinheit (10) in derselben Reihenfolge empfangen werden, in der sie von der Client-Einheit (10) gesendet wurden; und
eine Kontrolleinheit (12), umfassend eine zweite Sendeeinheit (122), konfiguriert zum Senden einer Aufforderung (6) an die Verarbeitungseinheit (10) und die mindestens eine weitere Verarbeitungseinheit (10) zur Ausführung einer Aktion, wobei die Aufforderung (6) einen Trigger umfasst, und
der Trigger ein Element der geordneten Gruppe ist; und
die Verarbeitungseinheit (10) Folgendes umfasst:
eine erste Empfangseinheit (102), konfiguriert zum Empfang des mindestens einen Stroms (4) von Nachrichten (2);
eine zweite Empfangseinheit (104), konfiguriert zum Empfang der Aufforderung (6); und
eine Bestimmungs- und Auslöseeinheit (106), konfiguriert zur Bestimmung, bei Empfang einer Nachricht (2), ob die Kennung der Nachricht (2) gleich oder größer als der Trigger ist und wenn ja, zur Auslösung der Aktion,
oder, alternativ, konfiguriert zur Bestimmung, bei Empfang einer Nachricht (2), ob die Kennung der Nachricht (2) kleiner oder gleich dem Trigger ist, und wenn ja, zur Auslösung der Aktion.

14. Verarbeitungseinheit (10) gemäß Anspruch 13, die mit der mindestens einen weiteren Verarbeitungseinheit (10) ein verteiltes Speichersystem bildet, und wobei die Auslösung der Aktion in jeder Verarbeitungseinheit (10) eines von Folgendem umfasst:
- Start einer Sicherung ihres Inhalts,
- Anlegen einer Version,
- Zustandsänderung einer Speicherentität, und
- eine Kombination der obigen Operationen.

15. Verarbeitungseinheit (10) gemäß Anspruch 13 oder 14, wobei die Kontrolleinheit (12) ferner eine Initialisierungseinheit (124) umfasst, die konfiguriert ist zum Senden einer Initialisierungsnachricht (8) an sowohl die Verarbeitungseinheit (10) als auch an die mindestens eine weitere Verarbeitungseinheit (10) zur Abfrage, ob die jeweilige Verarbeitungseinheit (10) zustimmt, eine Aktion auszuführen; und
die Verarbeitungseinheit (10) ferner Folgendes umfasst:
eine dritte Empfangseinheit (108), konfiguriert zum Empfang der Initialisierungsnachricht (8); und
eine Zustimmungsbestimmungseinheit (110), konfiguriert zur Bestimmung, ob sie zustimmt, die der Initialisierungsnachricht (8) zugeordnete Aktion auszuführen;
wobei die Bestimmungs- und Auslöseeinheit (106) so konfiguriert ist, dass sie die Aktion ausführt, wenn die Kontrolleinheit (12) feststellt, dass alle oder zumindest ein Teil der Verarbeitungseinheiten (10) zustimmt, die der Initialisierungsnachricht (8) zugeordnete Aktion auszuführen, und nachdem die Kontrolleinheit (12) eine Zustimmungsbestätigungsnachricht an die Verarbeitungseinheiten (10) gesendet hat.

16. Kontrolleinheit (12), konfiguriert zur Verwendung in einem System zur Kontrolle von Verarbeitungseinheiten (10), wobei das System Folgendes umfasst:
eine Client-Einheit (14), umfassend eine erste Sendeeinheit (142), konfiguriert zum Senden mindestens eines Stroms (4) von Nachrichten (2) an jede der Verarbeitungseinheiten (10), wobei
jede Nachricht (2) eine Kennung umfasst,
die Kennung ein Element einer geordneten Gruppe ist, und
die Nachrichten (2) in einer solchen Reihenfolge gesendet werden, dass, wenn eine erste Nachricht (2) vor einer zweiten Nachricht (2) gesendet wird, die Kennung der ersten Nachricht (2) kleiner ist als die Kennung der zweiten Nachricht (2), oder, alternativ, die Kennung der ersten Nachricht (2) größer ist als die Kennung der zweiten Nachricht (2), und
jeder Strom (4) von Nachrichten (2) von der Client-Einheit (14) an eine Verarbeitungseinheit (10) so beschaffen ist, dass die Nachrichten (2) des Stroms (4) von der Verarbeitungseinheit (10) in derselben Reihenfolge empfangen werden, in der sie von der Client-Einheit (10) gesendet wurden;
die Kontrolleinheit (12) eine zweite Sendeeinheit (122) umfasst, die konfiguriert ist zum Senden einer Aufforderung (6) an alle Verarbeitungseinheiten (10) zur Ausführung einer Aktion, wobei
die Aufforderung (6) einen Trigger umfasst, und
der Trigger ein Element der geordneten Gruppe ist;
wobei jede der Verarbeitungseinheiten (10) Folgendes umfasst:
eine erste Empfangseinheit (102), konfiguriert zum Empfang des mindestens einen Stroms (4) von Nachrichten (2);
eine zweite Empfangseinheit (104), konfiguriert zum Empfang der Aufforderung (6); und
eine Bestimmungs- und Auslöseeinheit (106), konfiguriert zur Bestimmung, bei Empfang einer Nachricht (2), ob die Kennung der Nachricht (2) gleich oder größer als der Trigger ist und wenn ja, zur Auslösung der Aktion,
oder, alternativ, konfiguriert zur Bestimmung, bei Empfang einer Nachricht (2), ob die Kennung der Nachricht (2) kleiner oder gleich dem Trigger ist, und wenn ja, zur Auslösung der Aktion.

17. Kontrolleinheit (12) gemäß Anspruch 16 ferner umfassend eine Initialisierungseinheit (124) konfiguriert zum Senden einer Initialisierungsnachricht (8)an jede der Verarbeitungseinheiten (10), zur Abfrage, ob die jeweilige Verarbeitungseinheit (10) zustimmt, eine Aktion auszuführen;
wobei jede der Verarbeitungseinheiten (10) ferner Folgendes umfasst:
eine dritte Empfangseinheit (108), konfiguriert zum Empfang der Initialisierungsnachricht (8); und
eine Zustimmungsbestimmungseinheit (110), konfiguriert zur Bestimmung, ob sie zustimmt, die der Initialisierungsnachricht (8) zugeordnete Aktion auszuführen;
und
wobei die Bestimmungs- und Auslöseeinheit (106) so konfiguriert ist, dass sie die Aktion ausführt, wenn die Kontrolleinheit (12) feststellt, dass alle oder zumindest ein Teil der Verarbeitungseinheiten (10) zustimmt, die der Initialisierungsnachricht (8) zugeordnete Aktion auszuführen, und nachdem die Kontrolleinheit (12) eine Zustimmungsbestätigungsnachricht an die Verarbeitungseinheiten (10) gesendet hat.

## Revendications

1. Procédé pour contrôler de unités de traitement (10), comprenant
une première procédure d'envoi pour envoyer, par une unité client (14), au moins un courant (4) de messages (2) à chacune des unités de traitement (10), dans lequel
chaque message (2) comporte un identifiant,
l'identifiant est un membre d'un groupe ordonné,
les messages (2) sont envoyés dans un tel ordre que, lorsqu'un premier message (2) est envoyé avant un deuxième message (2), l'identifiant du premier message (2) est plus petit que l'identifiant du deuxième message (2), ou, alternativement, l'identifiant du premier message (2) est plus grand que l'identifiant du deuxième message (2), et
chaque courant (4) de messages (2) de l'unité client (14) à une unité de traitement (10) est tel que les messages (2) du courant (4) sont reçus par l'unité de traitement (10) dans le même ordre dans lequel ils ont été envoyés par l'unité client (10);
une deuxième procédure d'envoi pour envoyer, par une unité de contrôle (12), une requête (6) à toutes les unités de traitement (10) pour exécuter une action, dans lequel
la requête (6) comporte un trigger, et
le trigger est un élément du groupe ordonné; et
pour chacune des unités de traitement (10),
une première procédure de réception pour recevoir, par l'unité de traitement (10), des au moins un courant (4) de messages (2);
une deuxième procédure de réception pour recevoir, par l'unité de traitement (10), la requête (6); et
une procédure de détermination et de déclenchement pour déterminer, par l'unité de traitement (10), lors de la réception d'un message (2), si l'identifiant du message (2) est égal à, ou plus grand que le trigger et dans l'affirmative, pour déclencher l'action par l'unité de traitement (10),
ou, alternativement, pour déterminer, par l'unité de traitement (10), lors de la réception d'un message (2), si l'identifiant du message (2) est plus petit que, ou égal au trigger et dans l'affirmative, pour déclencher l'action par l'unité de traitement (10).

2. Procédé selon la revendication 1, dans lequel
un canal par lequel des messages (2) d'un courant (4) sont envoyés, ne conserve pas forcément l'ordre des messages (2) et
les courants (4) sont implémentés par un mécanisme de réarrangement.

3. Procédé selon la revendication 1 ou 2, dans lequel
le groupe ordonné est le flot des nombres entiers; et
dans la première procédure d'envoi, les messages sont envoyés en ordre ascendant de leurs identifiants respectifs ou, alternativement, les messages sont envoyés en ordre descendant de leurs identifiants respectifs.

4. Procédé selon l'une quelconque des revendications précédentes, dans lequel les unités de traitement (10) forment un système de mémorisation distribué et le déclenchement de l'action dans chaque unité de traitement (10) comprend l'une des opérations suivantes:
- lancement d'un sauvegarde de son contenu,
- création d'une version,
- changement d'état d'une entité de mémoire et
- une combinaison des opérations sus-mentionnées.

5. Procédé selon l'une quelconque des revendications précédentes, dans lequel le déclenchement comprend l'envoi d'un message (18) sur l'état de l'unité de traitement (10) au moment du déclenchement de l'action, dans lequel le message (18) comprend le trigger.

6. Procédé selon l'une quelconque des revendications précédentes, comprenant en outre une procédure de mémorisation pour mémoriser, par l'unité de traitement (10), le trigger contenu dans la requête (6), et dans lequel la deuxième procédure de réception et la procédure de mémorisation sont en mesure de recevoir et de mémoriser plus d'un trigger avant de déclencher une des actions correspondantes.

7. Procédé selon l'une quelconque des revendications précédentes, comprenant en outre
une procédure d'initialisation pour envoyer, par l'unité de contrôle (12), un message d'initialisation (8) à chacune des unités de traitement (10), pour interroger si l'unité de traitement (10) respective consent à exécuter une action;
pour chacune des unités de traitement (10),
une troisième procédure de réception pour recevoir, par l'unité de traitement (10), le message d'initialisation (8); et
une procédure de détermination de consentement pour déterminer, par l'unité de traitement (10), si elle consent à exécuter l'action affectée au message d'initialisation (8);
dans lequel la procédure de détermination et de déclenchement est exécutée si l'unité de contrôle (12) détermine que toutes les unités de traitement (10) ou au moins une partie d'elles consentent à exécuter l'action affectée au message d'initialisation (8), et après que l'unité de contrôle (12) a envoyé un message de confirmation de consentement aux unités de traitement (10).

8. Système, configuré pour contrôler des unités de traitement (10), comprenant une pluralité d'unités de traitement (10);
une unité client (14), comprenant une première unité d'envoi (142), configurée pour envoyer au moins un courant (4) de messages (2) à chacune des unités de traitement (10), dans lequel
chaque message (2) comporte un identifiant,
l'identifiant est un membre d'un groupe ordonné,
les messages (2) sont envoyés dans un tel ordre que, lorsqu'un premier message (2) est envoyé avant un deuxième message (2), l'identifiant du premier message (2) est plus petit que l'identifiant du deuxième message (2), ou, alternativement, l'identifiant du premier message (2) est plus grand que l'identifiant du deuxième message (2), et
chaque courant (4) de messages (2) de l'unité client (14) à une unité de traitement (10) est tel que les messages (2) du courant (4) sont reçus par l'unité de traitement (10) dans le même ordre dans lequel ils ont été envoyés par l'unité client (10); et
une unité de contrôle (12), comprenant une deuxième unité d'envoi (122), configurée pour envoyer une requête (6) à toutes les unités de traitement (10) pour exécuter une action, dans lequel
la requête (6) comporte un trigger, et
le trigger est un élément du groupe ordonné;
dans lequel chacune des unités de traitement (10) comprend une première unité de réception (102), configurée pour recevoir le au moins un courant (4) de messages (2);
une deuxième unité de réception (104), configurée pour recevoir la requête (6); et une unité de détermination et de déclenchement (106), configurée pour déterminer, lors de la réception d'un message (2), si l'identifiant du message (2) est égal à, ou plus grand que le trigger et dans l'affirmative, pour déclencher l'action, ou, alternativement, configurée pour déterminer, lors de la réception d'un message (2), si l'identifiant du message (2) est plus petit que, ou égal au trigger, et dans l'affirmative, pour déclencher l'action.

9. Système selon la revendication 8, dans lequel
un canal par lequel des messages (2) d'un courant (4) sont envoyés, ne conserve pas forcément l'ordre des messages (2) et
les courants (4) sont implémentés par un mécanisme de réarrangement.

10. Système selon la revendication 8 ou 9, dans lequel les unités de traitement (10) forment un système de mémorisation distribué et le déclenchement de l'action dans chaque unité de traitement (10) comprend l'une des opérations suivantes:
- lancement d'un sauvegarde de son contenu,
- création d'une version,
- changement d'état d'une entité de mémoire et
- une combinaison des opérations sus-mentionnées.

11. Système selon l'une des revendications 8 à 10, dans lequel l'unité de traitement (10) comprend en outre une unité de mémorisation, configurée pour mémoriser le trigger contenu dans la requête (6), et
la deuxième unité de réception (104) et l'unité de mémorisation sont configurées pour être en mesure de recevoir et de mémoriser plus d'un trigger avant de déclencher une des actions correspondantes.

12. Système selon l'une des revendications 8 à 11, dans lequel l'unité de contrôle (12) comprend en outre une unité d'initialisation (124), configurée pour envoyer un message d'initialisation (8) à chacune des unités de traitement (10), pour interroger si l'unité de traitement (10) respective consent à exécuter une action;
chacune des unités de traitement (10) comprend en outre une troisième unité de réception (108), configurée pour recevoir le message d'initialisation (8); et
une unité de détermination de consentement (110), configurée pour déterminer si elle consent à exécuter l'action affectée au message d'initialisation (8);
dans lequel l'unité de détermination et de déclenchement (106) est configurée pour exécuter l'action si l'unité de contrôle (12) détermine que toutes les unités de traitement (10) ou au moins une partie d'elles consentent à exécuter l'action affectée au message d'initialisation (8), et après que l'unité de contrôle (12) a envoyé un message de confirmation de consentement aux unités de traitement (10).

13. Unité de traitement (10), configurée pour être utilisée dans un système pour contrôler l'unité de traitement (10) et au moins une autre unité de traitement (10), dans lequel le système comprend
une unité client (14), comprenant
une première unité d'envoi (142), configurée pour envoyer au moins un courant (4) de messages (2) et à l'unité de traitement (10) et à la au moins une autre unité de traitement (10), dans lequel
chaque message (2) comporte un identifiant,
l'identifiant est un membre d'un groupe ordonné,
les messages (2) sont envoyés dans un tel ordre que, lorsqu'un premier message (2) est envoyé avant un deuxième message (2), l'identifiant du premier message (2) est plus petit que l'identifiant du deuxième message (2), ou, alternativement, l'identifiant du premier message (2) est plus grand que l'identifiant du deuxième message (2), et
chaque courant (4) de messages (2) de l'unité client (14) à une unité de traitement (10) est tel que les messages (2) du courant (4) sont reçus par l'unité de traitement (10) dans le même ordre dans lequel ils ont été envoyés par l'unité client (10); et
une unité de contrôle (12), comprenant une deuxième unité d'envoi (122), configurée pour envoyer une requête (6) à l'unité de traitement (10) et la au moins une autre unité de traitement (10) pour exécuter une action, dans lequel la requête (6) comporte un trigger, et
le trigger est un élément du groupe ordonné; et
l'unité de traitement (10) comprend
une première unité de réception (102), configurée pour recevoir le au moins un courant (4) de messages (2);
une deuxième unité de réception (104), configurée pour recevoir la requête (6); et une unité de détermination et de déclenchement (106), configurée pour déterminer, lors de la réception d'un message (2), si l'identifiant du message (2) est égal à, ou plus grand que le trigger et dans l'affirmative, pour déclencher l'action, ou, alternativement, configurée pour déterminer, lors de la réception d'un message (2), si l'identifiant du message (2) est plus petit que, ou égal au trigger, et dans l'affirmative, pour déclencher l'action.

14. Unité de traitement (10) selon la revendication 13, qui forme avec l'autre unité de traitement (10) un système de mémorisation distribué et dans lequel le déclenchement de l'action dans chaque unité de traitement (10) comprend l'une des opérations suivantes:
- lancement d'un sauvegarde de son contenu,
- création d'une version,
- changement d'état d'une entité de mémoire et
- une combinaison des opérations sus-mentionnées.

15. Unité de traitement (10) selon la revendication 13 ou 14, dans laquelle l'unité de contrôle (12) comprend en outre une unité d'initialisation (124), configurée pour envoyer un message d'initialisation (8) et à l'unité de traitement (10) et à la au moins une autre unité de traitement (10) pour interroger si l'unité de traitement (10) respective consent à exécuter une action; et
l'unité de traitement (10) comprend en outre
une troisième unité de réception (108), configurée pour recevoir le message d'initialisation (8); et
une unité de détermination de consentement (110), configurée pour déterminer si elle consent à exécuter l'action affectée au message d'initialisation (8);
dans lequel l'unité de détermination et de déclenchement (106) est configurée pour exécuter l'action si l'unité de contrôle (12) détermine que toutes les unités de traitement (10) ou au moins une partie d'elles consentent à exécuter l'action affectée au message d'initialisation (8), et après que l'unité de contrôle (12) a envoyé un message de confirmation de consentement aux unités de traitement (10).

16. Unité de contrôle (12), configurée pour être utilisée dans un système pour contrôler des unités de traitement (10), dans lequel le système comprend une unité client (14), comprenant une première unité d'envoi (142), configurée pour envoyer au moins un courant (4) de messages (2) à chacune des unités de traitement (10), dans lequel
chaque message (2) comporte un identifiant,
l'identifiant est un membre d'un groupe ordonné, et
les messages (2) sont envoyés dans un tel ordre que, lorsqu'un premier message (2) est envoyé avant un deuxième message (2), l'identifiant du premier message (2) est plus petit que l'identifiant du deuxième message (2), ou, alternativement, l'identifiant du premier message (2) est plus grand que l'identifiant du deuxième message (2), et
chaque courant (4) de messages (2) de l'unité client (14) à une unité de traitement (10) est tel que les messages (2) du courant (4) sont reçus par l'unité de traitement (10) dans le même ordre dans lequel ils ont été envoyés par l'unité client (10);
l'unité de contrôle (12) comprend une deuxième unité d'envoi (122), configurée pour envoyer une requête (6) à toutes les unités de traitement (10) pour exécuter une action, dans lequel
la requête (6) comporte un trigger, et
le trigger est un élément du groupe ordonné;
dans lequel chacune des unités de traitement (10) comprend une première unité de réception (102), configurée pour recevoir le au moins un courant (4) de messages (2);
une deuxième unité de réception (104), configurée pour recevoir la requête (6); et
une unité de détermination et de déclenchement (106), configurée pour déterminer, lors de la réception d'un message (2), si l'identifiant du message (2) est égal à, ou plus grand que le trigger et dans l'affirmative, pour déclencher l'action, ou, alternativement, configurée pour déterminer, lors de la réception d'un message (2), si l'identifiant du message (2) est plus petit que, ou égal au trigger, et dans l'affirmative, pour déclencher l'action.

17. Unité de contrôle (12) selon la revendication 16, comprenant en outre une unité d'initialisation (124), configurée pour envoyer un message d'initialisation (8) à chacune des unités de traitement (10), pour interroger si l'unité de traitement (10) respective consent à exécuter une action;
dans lequel chacune des unités de traitement (10) comprend en outre une troisième unité de réception (108), configurée pour recevoir le message d'initialisation (8); et
une unité de détermination de consentement (110), configurée pour déterminer si elle consent à exécuter l'action affectée au message d'initialisation (8); et
dans lequel l'unité de détermination et de déclenchement (106) est configurée pour exécuter l'action si l'unité de contrôle (12) détermine que toutes les unités de traitement (10) ou au moins une partie d'elles consentent à exécuter l'action affectée au message d'initialisation (8), et après que l'unité de contrôle (12) a envoyé un message de confirmation de consentement aux unités de traitement (10).
